Europäisches Patentamt

(19) European Patent Office

Office européen des brevets

(11) EP 0 878 531 A1

(12) EUROPEAN PATENT APPLICATION
published in accordance with Art. 158(3) EPC

(43) Date of publication:
18.11.1998 Bulletin 1998/47

(51) Int. Cl.⁶: **C10G 1/10**, A62D 3/00, B09B 3/00, C08J 11/12, C10B 53/00

(21) Application number: 96939296.8

(22) Date of filing: 21.11.1996

(86) International application number:
PCT/JP96/03409

(87) International publication number:
WO 97/19147 (29.05.1997 Gazette 1997/23)

(84) Designated Contracting States:
AT DE DK FR GB IT NL SE

(30) Priority: 22.11.1995 JP 303215/95
14.02.1996 JP 26583/96
17.07.1996 JP 187063/96

(71) Applicant:
HITACHI ZOSEN CORPORATION
Osaka-shi, Osaka 554 (JP)

(72) Inventors:
• MIURA, Yoshimasa,
Hitachi Zosen Corporation
Osaka-shi, Osaka 554 (JP)

• OGINO, Etsuo,
Hitachi Zosen Corporation
Osaka-shi, Osaka 554 (JP)
• SUZUKI, Hideo,
Hitachi Zosen Corporation
Osaka-shi, Osaka 554 (JP)
• OKADA, Yuusuke,
Hitachi Zosen Corporation
Osaka-shi, Osaka 554 (JP)

(74) Representative:
TER MEER STEINMEISTER & PARTNER GbR
Artur-Ladebeck-Strasse 51
33617 Bielefeld (DE)

(54) **APPARATUS FOR LIQUEFYING WASTE PLASTICS**

(57) The object of the present invention is to provide an apparatus for converting waste plastics into oil which apparatus makes it possible to place waste plastics as they are into a thermal decomposition unit without removing polyvinyl chloride from the waste before treatment to ensure ease of handling, the apparatus further being capable of removing the resulting noxious decomposition gases and acid components effectively at a low cost.

The apparatus of the invention for converting waste plastics into oil comprises a feeder for placing into a thermal decomposition unit waste plastics which may include chlorine resins and nitrile resins, the thermal decomposition unit for thermally decomposing the waste plastics placed in, a cooling tower for cooling with water oil vapor and decomposition gases produced in the thermal decomposition unit, a neutralization tank for neutralizing the water used for cooling with an alkali, and an oil-water separator for separating condensed oil from water.

FIG.1

## Description

### TECHNICAL FIELD

The present invention relates to the treatment of waste plastics, and more particularly to an apparatus for converting waste plastics into oil which apparatus is so adapted that the noxious decomposition gases and acid components produced by the thermal decomposition of waste plastics into oil can be removed effectively at a low cost.

### BACKGROUND ART

The noxious decomposition gases and acid components produced by the thermal decomposition of waste plastics are conventionally removed, for example, by:

(1) separating off polyvinyl chloride manually or by wet floatation utilizing specific gravity differences or with a dry air stream before waste plastics are charged into an apparatus for converting the waste into oil, or by removing or thermally decomposing polyvinyl chloride with use of a salt removing tank resorting to heating and provided upstream from a thermal decomposition tank, or
(2) using a fixed absorption column provided on a discharge duct for thermal decomposition gases and having a granular chemical agent incorporated therein to cause the column to absorb hydrogen chloride gas and chlorine gas.

However, the method (1) described above has problems. Manual separation requires much labor, wet floatation separation produces a large amount of effluent water, dry air separation results in a low separation accuracy, or the salt removing tank to be additionally installed for use with heating necessitates an increased equipment cost and presents difficulty in transporting the melt of waste plastics. Further the method (2) is low in absorption efficiency due to the gas-solid reaction, also involving difficulty in handling.

In view of the foregoing problems, the object of the present invention is to provide an apparatus for converting waste plastics into oil which apparatus makes it possible to place waste plastics as they are into a thermal decomposition unit without removing polyvinyl chloride from the waste before treatment to ensure ease of handling, the apparatus further being capable of removing the resulting noxious decomposition gases and acid components effectively at a low cost.

### DISCLOSURE OF THE INVENTION

The present invention provides an apparatus for converting waste plastics into oil which is devised for fulfilling the above object. The apparatus comprises a feeder for placing into a thermal decomposition unit waste plastics which may include chlorine resins and nitrile resins, the thermal decomposition unit for thermally decomposing the waste plastics placed in, a cooling tower for cooling with water oil vapor and decomposition gases produced in the thermal decomposition unit, a neutralization tank for neutralizing the water used for cooling with an alkali, and an oil-water separator for separating condensed oil from water.

The term chlorine resins used herein refers to chlorine-containing resins such as polyvinyl chloride (PVC) and polyvinylidene chloride. The term nitrile resins refers to nitrile-containing resins such as ABS resin (acrylonitrile-butadiene-styrene copolymer). The nitrile resin is likely to produce HCN gas when thermally decomposed.

Waste plastics, even if including chlorine resins or nitrile resins, can be placed into the decomposition unit without removing these resins.

The thermal decomposition of waste plastics produces decomposition oil vapor and decomposition gases such as HCl, HCN and $Cl_2$.

Piping extends from the thermal decomposition unit to the cooling tower and is covered with heater means for maintaining or heating the piping preferably at a temperature of at least 200° C, more preferably at 250° C to 350° C.

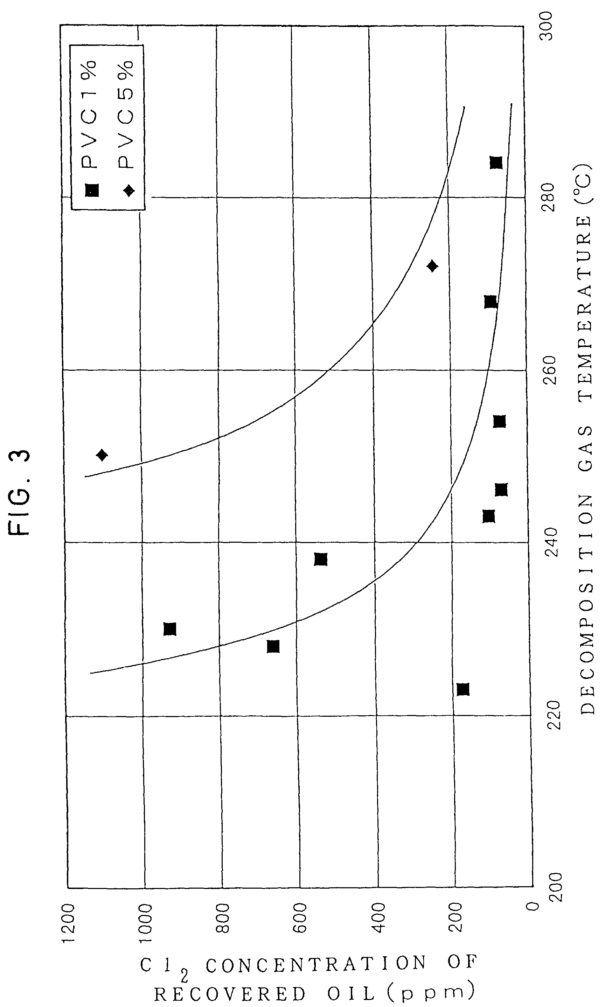

When the content of chlorine resins such as PVC in waste plastics increases, the $Cl_2$ concentration of the recovered oil also increases, whereas the $Cl_2$ concentration of the oil can be restricted to some extent by controlling the temperature of the decomposition gases to a predetermined range. For example, with reference to the graph of FIG. 3 showing the relationship between the decomposition gas temperature and the $Cl_2$ concentration of the recovered oil, the $Cl_2$ concentration of the recovered oil is about 70 wt. ppm at a PVC content of 1 wt. %, and about 150 wt. ppm at a PVC content of 5 wt. % when the decomposition gas temperature is about 290° C. Accordingly, in the case where the PVC content is up to 1 wt. %, the $Cl_2$ concentration of the recovered oil can be restricted to not greater than 100 wt. ppm by adjusting the decomposition gas temperature preferably to at least 250° C, more preferably to 250 to 350° C, at a position immediately upstream from the cooling tower with use of the thermal means covering the piping from the decomposition unit to the cooling tower for the maintenance of temperature or heating.

An electric heater is usually used as the heater means. The reaction between the decomposition oil vapor and $Cl_2$ can be inhibited since the piping is forcibly heated to not lower than 200° C. If the temperature of the piping heated is below 200° C, the oil vapor reacts with chlorine rapidly, producing organic chlorine compounds.

In this way, the thermal decomposition products are rapidly cooled before the reaction between the decomposition oil vapor and $Cl_2$ proceeds.

Preferably, the tower for rapid cooling is provided at its top with a pipe for releasing the decomposition gases therethrough.

The cooling water to be recycled through the cooling tower is maintained preferably at an acidity of up to 2 in pH. When the cooling water is thus held strongly acid, HCN gas which is one of the thermal decomposition products of waste plastics is discharged as it is, i.e., without forming a salt, from the system through the release pipe. However, the cooling water, if having an excessively high acidity, is likely to cause corrosion to the tower with the acid, so that the cooling water to be recycled is replenished with a suitable amount of water to avoid such corrosion. The cooling water to be recycled through the cooling tower is preferably 1 to 2 in pH.

Preferably, the interior of the cooling tower is made of a material of high acid resistance such as acid-resistant lining so as to prevent corrosion due to the acid.

Preferably, the neutralization tank is provided with a device for detecting the pH of the liquid therein and replenishing the tank with an alkali solution so as to hold the liquid alkaline at all times.

The neutralization tank may have a packed layer of limestone in place of the pH detecting and alkali solution replenishing device, and the water used for cooling is passed through the limestone packed layer for neutralization.

In the case where limestone is used as a neutralizing agent in this way, the neutralization tank may be provided at its top with a hopper for supplying limestone to the tank to allow the limestone supplied to descend inside the tank in the manner of a moving layer.

The pH detecting and alkali solution replenishing device can be dispensed with by placing a sufficient amount of limestone in the hopper.

When the water used for cooling passes through the limestone packed layer in the neutralization tank, the water having a pH of 2 and containing HCl is neutralized by the following reaction.

$$CaCO_3 + 2HCl \rightarrow CaCl_2 + CO_2 + H_2O$$

As this neutralization reaction proceeds, the limestone gradually decomposes and diminishes, while the tank is automatically replenished with limestone from the hopper in the manner of a moving layer at a rate corresponding to the diminution.

The invention described above inhibits the reaction between the decomposition oil vapor and $Cl_2$ and removes hydrochloric acid from the water without conducting the pretreatment, for example, of separating polyvinyl chloride from waste plastics and without causing a solid chemical agent to absorb the gases.

Further the present invention wherein the water used for cooling is neutralized by being passed through the limestone packed layer provided in the neutralization tank achieves a reduction in the running cost by using inexpensive limestone as a neutralizing agent.

Further according to the present invention, the neutralization tank is provided at its top with a hopper for supplying limestone, which is allowed to descend in the manner of a moving layer inside the tank. A complex device such as a pH detecting and alkali solution replenishing device can be dispensed with by placing a sufficient amount of limestone in the hopper, while the apparatus is easy to maintain and can be provided at a reduced construction cost and diminished material cost.

BRIEF DESCRIPTION OF THE DRAWINGS

FIG. 1 is a diagram showing Embodiment 1 of the invention;
FIG. 2 is a diagram showing Embodiment 2 of the invention; and
FIG. 3 is a graph showing the relationship between the decomposition gas temperature and the concentration of $Cl_2$ in the recovered oil.

BEST MODE OF CARRYING OUT THE INVENTION

The mode of practicing the present invention will be described in greater detail with reference to the following embodiments.

Embodiment 1

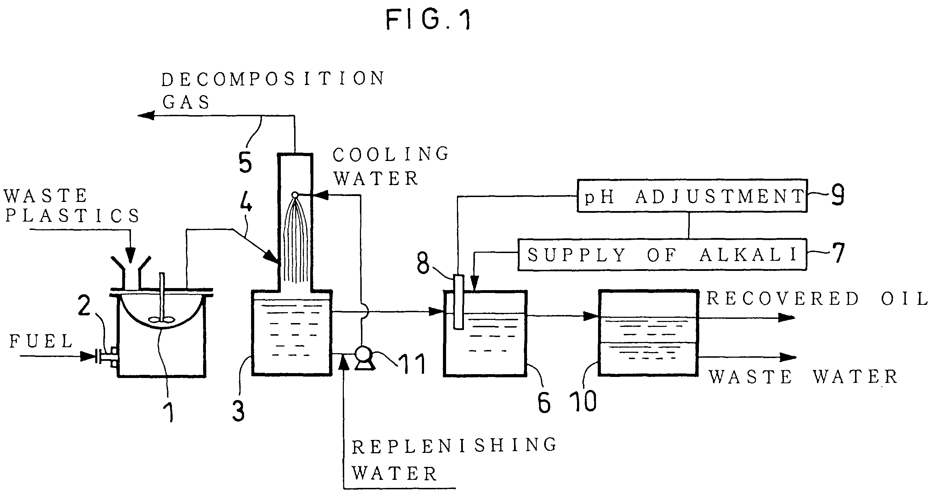

With reference to FIG. 1, waste plastics including 1 wt. % or 10 wt. % of polyvinyl chloride are placed into a thermal decomposition unit 1 by a feeder. The decomposition unit 1, which is heated by a burner 2, decomposes the waste plastics into decomposition oil vapor and decomposition gases. The gaseous mixture of the oil vapor and decomposition gases is then sent from the unit 1 to a cooling tower 3 through piping 4. The piping 4 is covered with an electric heater for maintaining or heating the piping at a temperature of 250°C to 350°C.

The cooling tower 3 is provided at its top with a pipe 5 for releasing the decomposition gases to the outside of the system therethrough. The interior of the cooling tower 3 has an acid-resistant lining for preventing corrosion with acid.

The gaseous mixture of decomposition oil vapor and decomposition gases is cooled in the tower 3 by direct contact with cooling water. The cooling water for the tower 3 is recycled from the bottom of the tower to the top thereof by a pump 11 outside the tower. The cooling water is replenished with a suitable amount of water so as to prevent an excessive rise in the concentration of hydrochloric acid to avoid the corrosion of the tower.

The oily liquid resulting from condensation within the tower 3 is sent to a neutralization tank 6, in which the liquid is treated with an alkali solution for neutralization to remove hydrochloric acid from the water contained in the oily liquid.

The neutralization tank 6 is provided with an alkali supply device 7 for replenishing the tank with the alkali solution, a pH meter 8 for detecting the pH of the liquid in the neutralization tank, and a pH adjuster 9 for operating the alkali supply device 7 in response to a signal from the pH meter 8 so as to hold the liquid alkaline at all times. The alkali solution is supplied to the neutralization tank by these means then the liquid in the tank becomes acid.

The water-containing oily liquid is then sent to an oil-water separator 10, and the recovered oil forming an upper layer in the separator 10 is sent to an oil tank, while the water providing a lower layer in the separator 10 is sent out from the system as waste water and disposed of.

The oil recovered was checked for total Cl content, HCl content and pH.

Table 1 shows the measurements obtained.

Table 1

| No. | Total Cl wt. ppm | HCl wt. ppm | pH |
|-----|------------------|-------------|-----|
| 1 | 1270 | 69 | 3.0 |
| 2 | 170 | 25 | 4.0 |
| 3 | 180 | 28 | 3.9 |
| 4 | 180 | 27 | 4.4 |
| 5 | 100 | 17 | 4.0 |
| 6 | 95 | 19 | 4.0 |
| 7 | 110 | 34 | 3.8 |

With reference to Table 1, the waste plastics No. 1 treated include 1 wt. % of polyvinyl chloride. The waste plastics No. 2 to No. 7 treated include 10 wt. % of polyvinyl chloride.

The wastes No. 2 to No. 7, although having 10 times the polyvinyl chloride content of the waste No. 1, are smaller in the total Cl content and HCl content of the recovered oil than the waste No. 1. This reveals that even when the waste plastics are placed into the thermal decomposition unit without removing polyvinyl chloride before treatment, the resulting decomposition oil and cooling water are effectively made free from the chlorine components.

Embodiment 2

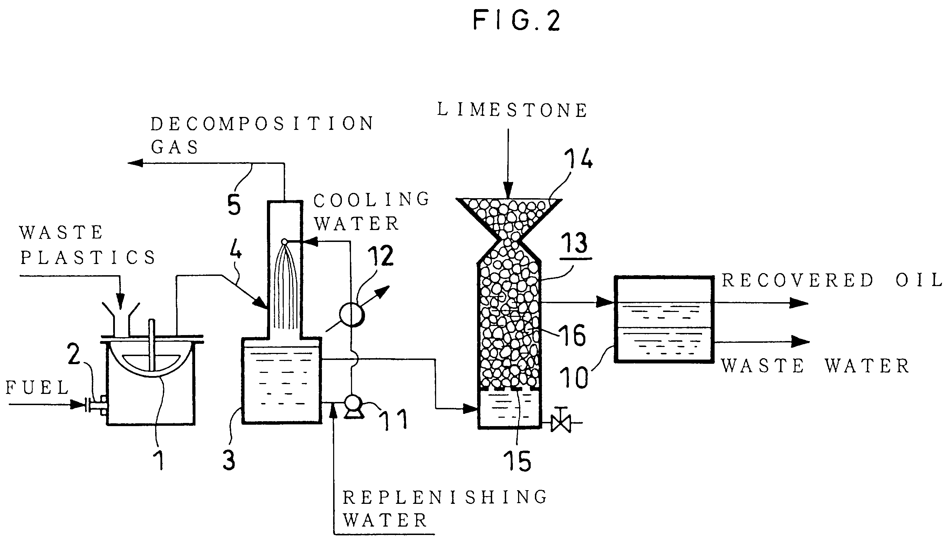

With reference to FIG. 2 in this embodiment, a cooling tower 3 has a cooling water recycling line which is provided with a heat exchanger 12. A neutralization tank 13 is in the form of a tower and has a hopper 14 at its top and a retaining plate 15 in the form of a perforated plate and provided horizontally inside its bottom for holding thereon a packed material.

The neutralization tank 13 is filled with limestone placed in from the hopper 14 to form a limestone packed layer 16 on the retaining plate 16. A large excess of limestone relative to the HCl to be neutralized is placed in the hopper 14.

In the present embodiment, the oily liquid resulting from condensation in the cooling tower 3 is sent into the bottom of the neutralization tank 13, then flows upward through the limestone layer 16 and is neutralized by contact with the limestone, whereby hydrochloric acid is removed from the water contained in the oily liquid.

The water-containing oily liquid is subsequently sent out from the upper end of the neutralization tank 13 into an oil-water separator 10. The recovered oil forming an upper layer in the separator 10 is sent to an oil tank, while the water forming a lower layer in the separator 10 is sent out from the system as waste water and disposed of. The waste water has been neutralized to a pH of at least 6 to not higher than 8 with the large excess of limestone supplied. Accordingly, the pH detector and alkali solution supply device provided in Embodiment 1 can be dispensed with.

The present embodiment is the same as Embodiment 1 with the exception of the above feature.

INDUSTRIAL APPLICABILITY

The present invention is useful for treating waste plastics and more particularly provides an apparatus for converting waste plastics into oil which apparatus is capable of effectively and inexpensively removing the noxious decomposition gases and acid components produced in thermally decomposing waste plastics into oil.

**Claims**

1. An apparatus for converting waste plastics into oil comprising a feeder for placing into a thermal decomposition unit waste plastics which may include chlorine resins and nitrile resins, said thermal decomposition unit for thermally decomposing the waste plastics placed in, a cooling tower for cooling with water oil vapor and decomposition gases produced in the thermal decomposition unit, a neutralization tank for neutralizing the water used for cooling with an alkali, and an oil-water separator for separating condensed oil from water.

2. An apparatus for converting waste plastics into oil according to claim 1 wherein piping extending from the thermal decomposition unit to the cooling tower is covered with thermal means for maintaining or heating the piping at a temperature of at least 200° C.

3. An apparatus for converting waste plastics into oil according to claim 2 wherein the piping extending from the thermal decomposition unit to the cooling tower is covered with heater means for maintaining or heating the piping at a temperature of 250° C to 350°C.

4.  An apparatus for converting waste plastics into oil according to claim 1 wherein piping extending from the thermal decomposition unit to the cooling tower is covered with thermal means for maintaining or heating the decomposition gases immediately upstream from the cooling tower at a temperature of 250 to 350°C.

5.  An apparatus for converting waste plastics into oil according to claim 1 wherein the cooling water of the cooling tower is maintained at an acidity of up to pH 2.

6.  An apparatus for converting waste plastics into oil according to claim 1 wherein the cooling tower is provided at a top thereof with a pipe for releasing the decomposition gases therethrough.

7.  An apparatus for converting waste plastics into oil according to claim 1 wherein the cooling tower is made of an acid-resistant material at least in an interior thereof.

8.  An apparatus for converting waste plastics into oil according to claim 1 wherein the neutralization tank is provided with a device for detecting the pH of the liquid therein and replenishing the tank with an alkali solution so as to hold the liquid alkaline at all times.

9.  An apparatus for converting waste plastics into oil according to claim 1 wherein the neutralization tank has a packed layer of limestone, and the water used for cooling is neutralized by being passed through the limestone packed layer.

10. An apparatus for converting waste plastics into oil according to claim 1 wherein the neutralization tank is provided at a top thereof with a hopper for supplying limestone to the tank to allow the limestone supplied to descend inside the tank in the manner of a moving layer.

# FIG.1

DECOMPOSITION GAS

COOLING WATER

WASTE PLASTICS

pH ADJUSTMENT — 9

SUPPLY OF ALKALI — 7

FUEL

RECOVERED OIL

WASTE WATER

REPLENISHING WATER

EP 0 878 531 A1

# FIG.2

DECOMPOSITION GAS

LIMESTONE

COOLING WATER

WASTE PLASTICS

RECOVERED OIL

FUEL

WASTE WATER

REPLENISHING WATER

EP 0 878 531 A1

# FIG. 3

## INTERNATIONAL SEARCH REPORT

| International application No. |
| --- |
| PCT/JP96/03409 |

**A. CLASSIFICATION OF SUBJECT MATTER**

Int. Cl$^6$  C10G1/10, A62D3/00, B09B3/00, C08J11/12, C10B53/00

According to International Patent Classification (IPC) or to both national classification and IPC

**B. FIELDS SEARCHED**

Minimum documentation searched (classification system followed by classification symbols)

Int. Cl$^6$  C10G1/10, A62D3/00, B09B3/00, C08J11/12, C10B53/00

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 6-226233, A (Nichias Corp., and another), August 16, 1994 (16. 08. 94), Claim; column 5 | 1, 6-10 |
| A | (Family: none) | 2 - 5 |

☐ Further documents are listed in the continuation of Box C.　　☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| February 17, 1997 (17. 02. 97) | February 25, 1997 (25. 02. 97) |

| Name and mailing address of the ISA/ | Authorized officer |
| --- | --- |
| Japanese Patent Office | |
| Facsimile No. | Telephone No. |

Form PCT/ISA/210 (second sheet) (July 1992)